# EUROPEAN PATENT APPLICATION

(11) **EP 4 804 385 A1**
(43) Date of publication of application: **09.09.2026**
(21) Application number: 26158756.2
(22) Date of filing: 16.02.2026
(51) Int. Cl.: H02K 3/30, H02K 3/34, H02K 3/14, H02K 3/28

(54) **STATOR OF ELECTRIC MOTOR**

(30) Priority: 05.03.2025 JP 2025034624
(71) Applicant: Toyota Jidosha Kabushiki Kaisha, Toyota-shi, Aichi-ken 471-8571 (JP)
(72) Inventor: YAMADA, Noriyoshi, Toyota-shi, Aichi-ken, 471-8571 (JP); URANO, Hiroaki, Toyota-shi, Aichi-ken, 471-8571 (JP); OHTA, Kei, Toyota-shi, Aichi-ken, 471-8571 (JP); OHIRA, Kengo, Toyota-shi, Aichi-ken, 471-8571 (JP); NAGASAWA, Naohiro, Toyota-shi, Aichi-ken, 471-8571 (JP); MAENO, Tomoaki, Toyota-shi, Aichi-ken, 471-8571 (JP)
(74) Representative: TBK

(57) **Abstract**

A stator (2) disclosed in the present specification includes: a stator core (3) that includes teeth (4); a coil (10) wound around the teeth (4) in a plurality of turns; and an insulating sheet (21). The insulating sheet (21) is disposed between adjacent ones of the teeth (4) and surround at least two turns of the coil (10). A part of the insulating sheet (21) is sandwiched between two adjacent turns. A foam material having insulating properties is attached to the part of the insulating sheet (21), and the foam material is also sandwiched between the two adjacent turns. By sandwiching the foam material between two specific adjacent turns, high insulation can be ensured between the two specific turns.

## Description

### BACKGROUND OF THE INVENTION

### 1. Field of the Invention

The present disclosure relates to a stator of an electric motor.

### 2. Description of Related Art

A stator includes a stator core and a coil wound around teeth of the stator core. Each winding of the coil is called a turn. Windings of the coil are covered with an insulating layer so that adjacent turns are not electrically connected (see Japanese Translation of PCT International Application No. 2024-543611 (JP 2024-543611 A), for example). When the insulation layer does not provide sufficient insulation, an insulating sheet such as that disclosed in Japanese Unexamined Patent Application Publication No. 2023-101090 (JP 2023-101090 A) may be used. The insulating sheet according to JP 2023-101090 A contains a foaming agent. When the windings are covered with an insulating sheet before being foamed, and the insulating sheet is foamed after the coil is formed, a coil in which the spaces between adjacent turns are filled with the foaming agent can be obtained.

### SUMMARY OF THE INVENTION

When the entire length of the windings is covered with the insulating sheet, the cross-sectional area of the coil (the cross-sectional area obtained when the coil is cut along a plane passing through the axis of the coil) increases. The present disclosure provides a stator that ensures the necessary insulation between turns of a coil while suppressing an increase in the cross-sectional area of the coil.

An aspect of the present disclosure provides a stator of an electric motor. The stator includes: a stator core that includes teeth; a coil wound around the teeth in a plurality of turns; and an insulating sheet. The insulating sheet is disposed between adjacent ones of the teeth and surrounds at least two turns of the coil, a part of the insulating sheet being sandwiched between two adjacent turns. A foam material having insulating properties is attached to the part of the insulating sheet. The foam material is sandwiched between the two adjacent turns.

Two turns that are physically adjacent may not be electrically adjacent, and conversely, two turns that are electrically adjacent may not be physically adjacent. For example, there is a case where the coil includes a plurality of coil segments having a U-shape, and the coil segments are fitted with the teeth. When two coil segments that are physically far apart are electrically connected, a first coil segment positioned next to a second coil segment is physically adjacent to the second coil segment but not electrically adjacent (two electrically connected coil segments are electrically adjacent but not physically adjacent). When a current flows through the coil, the potential difference between turns that are not electrically adjacent is greater than the potential difference between turns that are electrically adjacent.

When a stimulus is applied to the foam material between the two turns, the foam material expands and fills the space between the turns so as to expand the distance between the two turns. In this way, high insulation is ensured between the two turns.

In the stator according to the aspect of the present disclosure, the part of the insulating sheet and the foam material may be sandwiched between two of the turns that are physically adjacent and not electrically adjacent.

By sandwiching a foam material between two turns, the potential difference between which is great when a current flows, it is possible to ensure the necessary insulation between the turns of the coil while suppressing an increase in the cross-sectional area of the coil.

The insulating sheet, to which the foam material before expansion is attached, can maintain its folded shape, and thus can be easily placed in the slot (the space between adjacent teeth) before the coil is inserted. At this time, the foam material before expansion is held at an intended position. It does not cost much to hold the foam material before expansion at a predetermined position in the slot. The stator in which the foam material has expanded between adjacent turns can be manufactured at a low cost using the insulating sheet, to a part of which the foam material before expansion is attached.

In the stator according to the aspect of the present disclosure, a starting end turn and a terminal end turn of the coil may be physically adjacent to each other. The part of the insulating sheet and the foam material may be sandwiched between the starting end turn and terminal end turn.

When a current flows, the potential difference is the greatest between the starting end turn and the terminal end turn of the coil. This makes it possible to increase the insulation between turns, the potential difference between which is the greatest when a current flows.

In the stator according to the aspect of the present disclosure, the coil may include a plurality of coil segments having a U-shape and fitted with the teeth. Each of the coil segments may correspond to each of the turns. One arm of the U-shape of one specific coil segment of the coil segments may be electrically connected to the other arm of another coil segment that is not physically adjacent. The specific coil segment and a different coil segment disposed adjacent to the specific coil segment may correspond to two turns that are physically adjacent and not electrically adjacent. The foam material may be sandwiched between the specific coil segment and the different coil segment disposed adjacent to the specific coil segment.

By placing a folded insulating sheet between two adjacent teeth and then inserting a U-shaped coil segment, a coil in which the insulating sheet is sandwiched between predetermined turns (predetermined segments) can be manufactured at a low cost.

In the stator according to the aspect of the present disclosure, the insulating sheet may surround all of the turns of the coil.

Details and further improvements of the technique disclosed in the present specification will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a stator according to a first embodiment;
FIG. 2 is a front view of a segment;
FIG. 3 illustrates the electrical connection relationship among a plurality of turns (segments); and
FIG. 4 illustrates a method of manufacturing the stator.

### DETAILED DESCRIPTION OF EMBODIMENTS

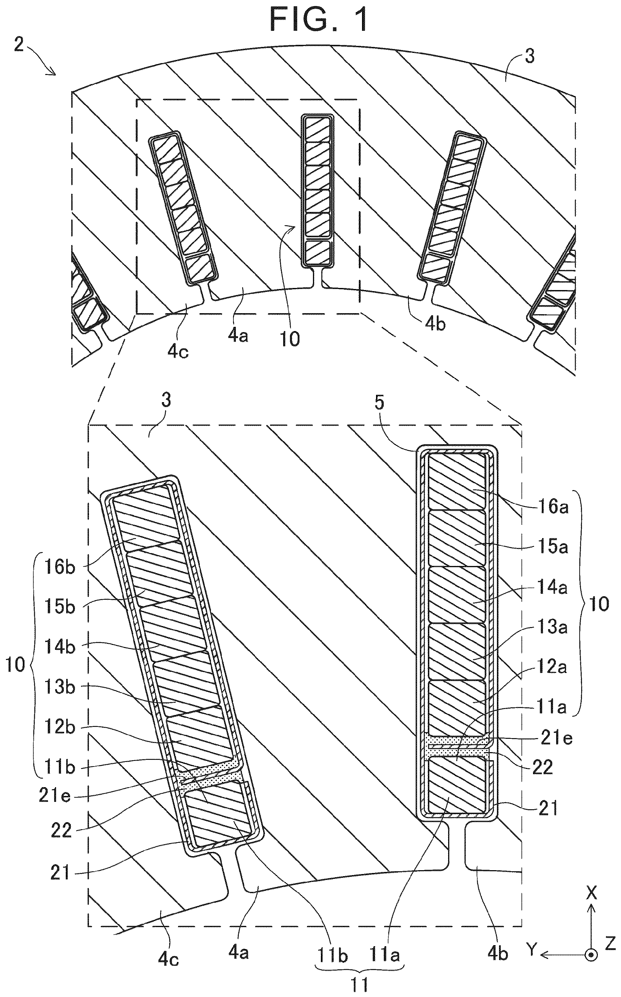

A stator 2 according to an embodiment will be described with reference to the drawings. FIG. 1 is a cross-sectional view of the stator 2. FIG. 1 is a cross-sectional view of the stator 2 in a cylindrical shape, the stator 2 being cut along a plane orthogonal to the axis of the stator 2. The Z axis of the coordinate system in the drawing is parallel to the axis of the stator 2, and the XY plane is parallel to the plane orthogonal to the axis. In FIG. 1, only a part of the stator 2 is illustrated.

The stator 2 includes a stator core 3 and a coil 10. The stator core 3 has a cylindrical shape and is provided with a plurality of teeth 4a to 4c on the inner side. The teeth 4a to 4c are arranged along the inner periphery of the stator core 3 in a cylindrical shape. A coil is wound around every other one of the teeth. The coil 10 is wound around the tooth 4a. The lower part of FIG. 1 illustrates an enlarged view of the coil 10 wound around the tooth 4a.

The space between two adjacent teeth (for example, teeth 4a and 4b) is called a slot 5. The windings of the coil 10 pass through the slot 5.

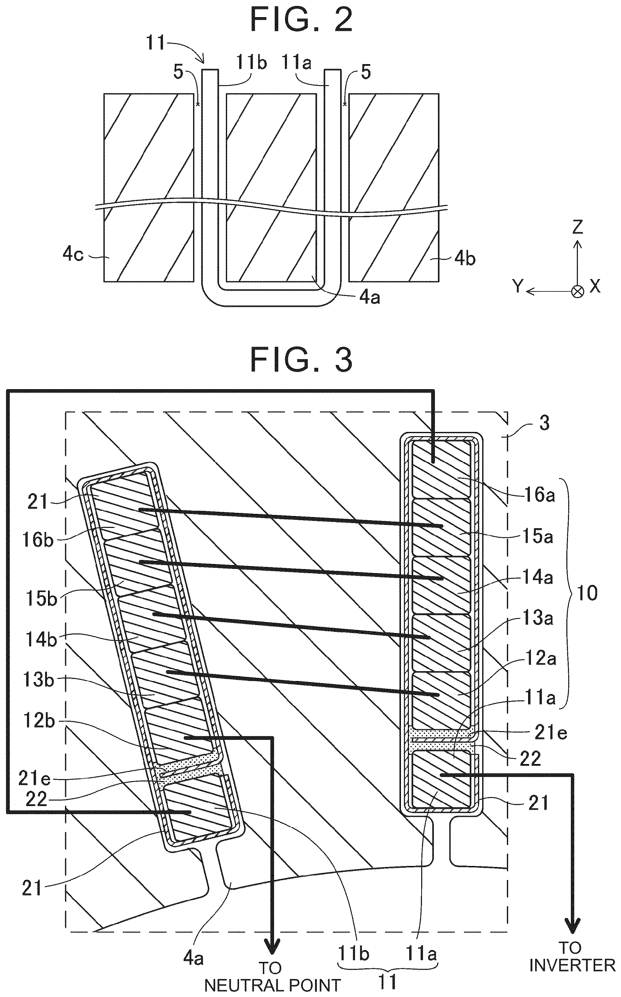

The coil 10 is made up of a plurality of coil segments in a U-shape. Hereinafter, for convenience of description, the "coil segments" will be simply referred to as "segments". FIG. 2 is a front view of one segment 11. FIG. 2 also illustrates a cross section of the teeth 4a to 4c. The segment 11 is made of a conductor (typically copper). The segment 11 is fitted with the tooth 4a. In other words, each arm of the segment 11 is inserted into the slot 5 on each side of the tooth 4a. For convenience of description, one arm of the U-shape of the segment 11 will be referred to as a right arm 11a, and the other arm will be referred to as a left arm 11b. The right arm 11a passes through one side of the tooth 4a, and the left arm 11b passes through the other side of the tooth 4a. A plurality of segments is fitted with one tooth 4a, and the tip of the right arm 11a of one segment 11 is connected to the tip of the left arm 11b of another segment, and the tip of the left arm 11b of the segment 11 is connected to the tip of the right arm of still another segment. In this way, the segments are electrically connected to constitute the coil 10 wound around the tooth 4a. Since one segment 11 surrounds the tooth 4a, one segment corresponds to one turn of the coil. Hereinafter, the "segment 11 (coil segment 11)" will also be referred to as a "turn 11".

Returning to the description of FIG. 1, in the stator 2 in FIG. 1, six segments 11 to 16 are fitted with one tooth 4a. In other words, six segments 11 to 16 fitted with one tooth 4a constitute one coil 10. As mentioned above, each of the six segments 11 to 16 corresponds to a turn. In FIG. 1, reference sign 11 is given to only the segment 11 (turn 11), and reference signs 12 to 16 of the remaining segments (turns) are not indicated. However, in FIG. 1, reference signs are given to the right and left arms of all of the turns. For example, a segment having a right arm 16a and a left arm 16b corresponds to a segment 16 (turn 16). The coil 10 has six turns (turns 11 to 16). The electrical connection relationship among the turns 11 to 16 (segments 11 to 16) will be described later.

The windings of the coil 10 are covered with an insulating layer, but the insulating layer is not illustrated. When a current flows through the coil 10, the potential difference between two specific turns (turns 11 and 12) that are physically adjacent is greater than the potential difference between the other two turns. Therefore, in the stator 2, a foam material 22 having insulating properties is sandwiched between the turns 11 and 12.

The foam material 22 is attached to one end of an insulating sheet 21. The insulating sheet 21 surrounds six turns 11 to 16 between adjacent teeth 4a and 4b (in other words, within the slot 5), and one end 21e of the insulating sheet 21 is sandwiched between the turns 11 and 12. The foam material 22 is attached to the one end 21e.

The foam material 22 expands the gap between the turns 11 and 12. The foam material 22 causes the distance between the turns 11 and 12 to be longer than the distance between the other two turns. By making the distance between the two turns 11 and 12 longer than the distance between the other turns, the insulation between the turns 11 and 12 is higher than that between the other turns. A method of manufacturing the stator 2 including the insulating sheet 21 to which the foam material 22 is attached will be described later.

The foam material 22 is disposed only between the turns 11 and 12, and not between any other two adjacent turns (for example, turns 12 and 13 or turns 15 and 16). By sandwiching the foam material 22 only between the two turns (turns 11 and 12), the potential difference between which is greater than the others when a current flows, the stator 2 can ensure the necessary insulation between adjacent turns while suppressing an increase in the total cross-sectional area of the coil.

The electrical connection relationship among the turns 11 to 16 (segments 11 to 16) will be described. In FIG. 3, which is the same as the lower part of FIG. 1, the connections between turns (between segments) are indicated by bold lines. One end of the coil 10 is connected to an inverter, and the other end is connected to a neutral point. For convenience of description, one end of the coil 10 will be referred to as a starting end, and the other end will be referred to as a terminal end. In the coil 10, the tip of the right arm 11a of the turn 11 is connected to the inverter, and the tip of the left arm 11b is connected to the tip of the right arm 16a of the turn 16. Hereinafter, for convenience of description, the "tip of the right arm (left arm) of the turn" will be simply referred to as the "right arm (left arm) of the turn". The left arm 16b of the turn 16 is connected to the right arm 15a of the turn 15, and the left arm 15b of the turn 15 is connected to the right arm 14a of the turn 14. The left arm 14b of the turn 14 is connected to the right arm 13a of the turn 13, and the left arm 13b of the turn 13 is connected to the right arm 12a of the turn 12. The left arm 12b of the turn 12 is connected to the neutral point. That is, the coil 10 is electrically connected in the order of the turn 11, the turn 16, the turn 15, the turn 14, the turn 13, and the turn 12. The turn 11 and the turn 16 are electrically adjacent to each other. Similarly, the turn 16 and the turn 15, the turn 15 and the turn 14, the turn 14 and the turn 13, and the turn 13 and the turn 12 are electrically adjacent to each other.

On the other hand, as can be seen from the drawing, the coil 10 is physically arranged in the order of the turn 11, the turn 12, the turn 13, the turn 14, the turn 15, and the turn 16. The turn 11 and the turn 12 are physically adjacent to each other. Similarly, the turn 12 and the turn 13, the turn 13 and the turn 14, the turn 14 and the turn 15, and the turn 15 and the turn 16 are physically adjacent to each other.

The turn 11 corresponds to the starting end of the coil 10, and the turn 12 corresponds to the terminal end. The turn 11 and the turn 12 are physically adjacent to each other but not electrically adjacent to each other. When a current flows through the coil 10, the potential difference between the turn 11 corresponding to the starting end and the turn 12 corresponding to the terminal end is much greater than the potential difference between the other adjacent turns. By sandwiching the foam material 22 between the turn 11 corresponding to the starting end and the turn 12 corresponding to the terminal end, the insulation between the turns with a great potential difference can be made higher than the insulation between the other turns. That is, the stator 2 can ensure insulation according to the potential difference between adjacent turns.

In the stator 2 according to the first embodiment, the foam material 22 is sandwiched between a pair of turns (turn 11 and turn 12) that are physically adjacent but not electrically adjacent and the potential difference between which is the greatest when a current flows through the coil 10. This makes it possible to ensure the necessary insulation between the turns, the potential difference between which is the greatest when a current flows, while suppressing an increase in the cross-sectional area of the entire coil (the cross-sectional area obtained when the coil is cut along a plane orthogonal to the axis). The potential difference is the greatest when the turn 11 at the starting end of the coil 10 and the turn 12 at the terminal end are adjacent to each other.

The technique disclosed in the present specification is not limited to the case where the potential difference between turns is the greatest when a current flows. When a current flows, the potential difference between turns that are physically adjacent and not electrically adjacent is greater than the potential difference between turns that are physically and electrically adjacent. Therefore, the feature of the technique disclosed in the present specification is that the foam material 22 is sandwiched between two turns that are physically adjacent and not electrically adjacent.

The foam material 22 is attached to one end 21e of the insulating sheet 21. The insulating sheet 21 surrounds all of the turns 11 to 16 of the coil 10 between the adjacent teeth 4a and 4b. The insulating sheet 21 improves the insulation between the coil 10 and the teeth 4a and 4b.

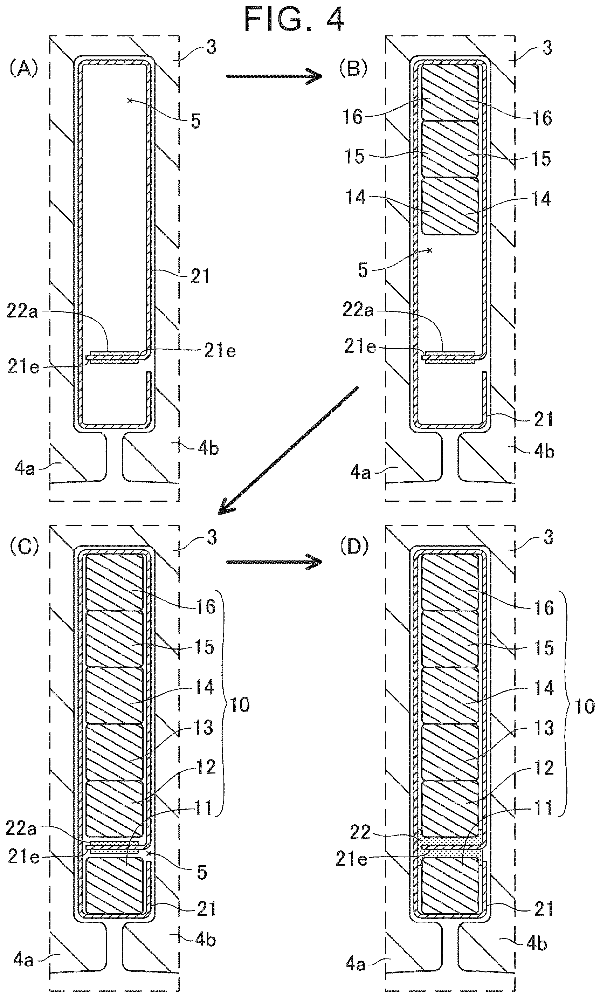

The insulating sheet 21 also contributes to reducing the manufacturing cost of the stator 2. The insulating sheet 21 is, for example, insulating paper, and can maintain its folded shape. A method of manufacturing the stator 2 will be described with reference to FIG. 4. FIG. 4 illustrates a cross section of one slot 5 (space between the teeth 4a and 4b) of the stator core 3. Prior to inserting the segments 11 to 16 into the slot 5, the insulating sheet 21, to one end 21e of which the foam material 22a before being foamed is attached, is placed in the slot 5 (part (A) of FIG. 4). As mentioned above, the insulating sheet 21 can maintain its folded shape. The insulating sheet 21 is placed in the slot 5 such that the foam material 22a before being foamed is positioned at an intended location (i.e., between the segments 11 and 12) before the segments are inserted.

Subsequently, the segments 11 to 16 are inserted into the slot 5 (part (B) of FIG. 4). Since the foam material 22a has not yet expanded, the segments 11 and 12 can be inserted into the slots 5 with sufficient space (part (C) of FIG. 4). When the right arm 11a (12a to 16a) of the segment 11 (12 to 16) is inserted into the slot 5, the left arm 11b (12b to 16b) of the segment 11 (12 to 16) is inserted into the slot 5 (see FIG. 1) between the teeth 4a and 4c. In other words, the segment 11 (12 to 16) having a U-shape is fitted with the teeth 4 such that the tooth 4a is positioned between both arms of the U-shape.

The foam material 22a expands when a specific stimulus is applied. The specific stimulus may be, for example, ultraviolet light, heat, or a specific agent. After all the segments 11 to 16 are inserted into the slot 5, a specific stimulus is applied to the foam material 22a. The foam material 22a expands and fills the space between the segments 11 and 12 without any gaps so as to expand the distance between the segments 11 and 12 (foam material 22 in part (D) of FIG. 4). In this way, high insulation is ensured between the segments 11 and 12 (turns 11 and 12). For example, a thermosetting resin that foams and expands when heated and that has insulating and heat-resistant properties is selected as the foaming material.

The insulating sheet 21, to one end 21e of which the foam material 22 before expansion is attached, can maintain its folded shape, and thus can be easily placed in the slot 5 before the segments are inserted. At this time, the foam material 22a before expansion is held at an intended position. It does not cost much to hold the foam material 22a before expansion at a predetermined position in the slot 5. As illustrated in parts (A) to (D) of FIG. 4, the stator 2 in which the foam material 22 has expanded between adjacent segments 11 and 12 (turns 11 and 12) can be manufactured at a low cost using the insulating sheet 21, to one end 21e of which the foam material 22a before expansion is attached.

Points to be noted regarding the technique described in the embodiment will be described. The insulating sheet 21 is disposed between adjacent teeth (for example, teeth 4a and 4b). The insulating sheet 21 has a length in the axial direction of the stator 2 that is substantially the same as the length of the stator. In a cross section obtained by cutting the stator 2 along a plane orthogonal to the axis of the stator 2, the insulating sheet 21 surrounds the turns 11 to 16 of the coil 10, and one end 21e is sandwiched between two adjacent turns (turns 11 and 12). The foam material 22 is attached to the one end 21e, and the foam material 22 is disposed between the turns 11 and 12 (segments 11 and 12). The foam material 22 is placed in the slot 5 between the turns 11 and 12 (segments 11 and 12) before expansion and is expanded between the turns 11 and 12 (segments 11 and 12). The expanded foam material fills the space between the turns 11 and 12 (segments 11 and 12) and ensures high insulation between the turns 11 and 12 (segments 11 and 12).

The insulating sheet 21, to one end of which the foam material 22 is attached, surrounds all of the turns 11 to 16 within the slot 5. It is only necessary that the insulating sheet should surround at least two turns. Two insulating sheets may be disposed in one slot. A foam material may be attached to an end of each of the insulating sheets, and each foam material may be disposed between a different pair of turns.

In some cases, the stator coil includes a first tooth and a second tooth, and a first coil is wound around the first tooth and a second coil is wound around the second tooth. In the technique disclosed in the present specification, the position at which the foam material is sandwiched (the position in the arrangement of turns) may be different between the first coil and the second coil. The technique disclosed in the present specification can be applied to a stator having a coil wound around teeth in a plurality of turns.

The coil 10 made up of a plurality of segments has the following features. The coil 10 includes a plurality of segments 11 to 16 (coil segments 11 to 16) having a U-shape and fitted with the tooth 4a. Each of the segments having a U-shape includes a right arm and a left arm, and right arms of all the segments pass through one side of the tooth 4a, and left arms pass through the other side of the tooth 4a. The tip of the right arm of one of the segments is electrically connected to the tip of the left arm of another segment, and the tip of the left arm is connected to the tip of the right arm of still another segment. In this way, the segments constitute the coil 10 wound around the tooth 4a. The tip of one arm (left arm 11b) of the U-shape of a specific segment (segment 11) is electrically connected to the tip of the other arm (right arm 16a) of another segment (segment 16) that is not physically adjacent.

One segment corresponds to one turn. A specific segment (segment 11) and another segment (segment 12) disposed adjacent to the specific segment correspond to two turns (turns 11 and 12) that are physically adjacent and not electrically adjacent. One end 21e of the insulating sheet 21 and the foam material 22 are sandwiched between the turns.

When a current flows through a coil, the potential difference between two turns that are physically adjacent but not electrically adjacent is greater than the potential difference between two turns that are physically and electrically adjacent. By disposing the insulating foam material 22 between two turns that are physically adjacent but not electrically adjacent, and not disposing a foam material between two turns that are physically and electrically adjacent, it is possible to ensure the necessary insulation between turns while suppressing an increase in the cross-sectional area of the coil.

The wording "two turns that are physically adjacent" means that one turn is positioned next to the other turn. The wording "two turns that are physically adjacent" may be rephrased as "two turns that are structurally adjacent". The wording "two turns that are electrically adjacent" means that an end of one turn is electrically connected to an end of the other turn. As illustrated in FIG. 3, the tip of the left arm 11b of the turn 11 is electrically connected to the tip of the right arm 16a of the turn 16 by an electric cable. At this time, the turns 11 and 16 are electrically adjacent to each other. Other turns (turns 12 to 15) are positioned between the turns 11 and 16, and the turns 11 and 16 are not physically adjacent to each other.

In the stator according to the embodiment, one end of the insulating sheet 21 is sandwiched between two turns, and the foam material 22 is attached to the one end. One end of the insulating sheet may pass between two adjacent turns. That is, it is only necessary that a part of the insulating sheet should be sandwiched between two turns, and a foam material should be attached to the part (the part sandwiched between the two turns). The foam material may be attached to both surfaces of the insulating sheet, or to only one surface of the insulating sheet.

Although a specific example of the present disclosure has been described in detail above, this is merely illustrative, and is not intended to limit the scope of the claims. The technique set forth in the claims includes various modifications and alterations of the specific example given above. The technical elements indicated in the present specification or drawings exhibit technical utility either alone or in various combinations, and are not limited to the combinations set forth in the claims as originally filed. Furthermore, the technique indicated in the present specification or drawings can achieve a plurality of objects at the same time, and achieving one of these objects itself has technical utility.

## Claims

1. A stator (2) of an electric motor, the stator (2) comprising:
a stator core (3) that includes teeth (4);
a coil (10) wound around the teeth (4) in a plurality of turns; and
an insulating sheet (21) disposed between adjacent ones of the teeth (4) and surrounding at least two turns of the coil (10), a part of the insulating sheet (21) being sandwiched between two adjacent turns, wherein a foam material having insulating properties is attached to the part of the insulating sheet (21), and the foam material is sandwiched between the two adjacent turns.

2. The stator (2) according to claim 1, wherein the part of the insulating sheet (21) and the foam material are sandwiched between two of the turns that are physically adjacent and not electrically adjacent.

3. The stator (2) according to claim 2, wherein a starting end turn and a terminal end turn of the coil (10) are physically adjacent to each other, and the part of the insulating sheet (21) and the foam material are sandwiched between the starting end turn and terminal end turn.

4. The stator (2) according to any one of claims 1 to 3, wherein:
the coil (10) includes a plurality of coil segments having a U-shape and fitted with the teeth (4);
each of the coil segments corresponds to each of the turns;
one arm of the U-shape of one specific coil segment of the coil segments is electrically connected to the other arm of another coil segment that is not physically adjacent;
the specific coil segment and a different coil segment disposed adjacent to the specific coil segment correspond to two turns that are physically adjacent and not electrically adjacent; and
the foam material is sandwiched between the specific coil segment and the different coil segment disposed adjacent to the specific coil segment.

5. The stator (2) according to claim 1, wherein the insulating sheet (21) surrounds all of the turns of the coil (10).
